Europäisches Patentamt

European Patent Office

Office européen des brevets

(19)

(11) Veröffentlichungsnummer: **0 151 756**
**B1**

(12) # EUROPÄISCHE PATENTSCHRIFT

(45) Veröffentlichungstag der Patentschrift:
18.01.89

(51) Int. Cl.⁴: **B 60 H 1/34**, F 24 F 13/065

(21) Anmeldenummer: 84115501.3

(22) Anmeldetag: 15.12.84

(54) **Belüftungsdüse.**

(30) Priorität: 30.01.84 DE 3403084

(43) Veröffentlichungstag der Anmeldung:
21.08.85 Patentblatt 85/34

(45) Bekanntmachung des Hinweises auf die Patenterteilung:
18.01.89 Patentblatt 89/3

(84) Benannte Vertragsstaaten:
FR GB IT SE

(56) Entgegenhaltungen:
DE-A- 2 031 986
DE-A- 2 910 125
DE-A- 3 044 289
FR-A- 1 576 872
GB-A- 1 003 917
US-A- 2 894 441

(73) Patentinhaber: AURORA Konrad G. Schulz GmbH & Co,
Südring 4, D-6933 Mudau/Odenwald (DE)

(72) Erfinder: Kern, Alfred, Rippberger Stasse 2,
D-8761 Schneeberg (DE)

(74) Vertreter: Splanemann, Rainer, Patentanwälte R.
Splanemann Dr. B. Reitzner Tal 13,
D-8000 München 2 (DE)

**Beschreibung**

Die Erfindung betrifft eine Belüftungsdüse der im Oberbegriff von Anspruch 1 angegebenen Art.

Bei einer derartigen Belüftungsdüse z.B. gemäss der GB-A-1 003 917 ist es bekannt, den Lufteintrittsstutzen mit einer horizontalen Luftaustrittsöffnung zu versehen, deren Ebene unter einem rechten Winkel zur Strömungsrichtung verläuft und die in einem horizontalen Abschnitt der Wandung oberhalb des Armaturenbretts eines Personenkraftwagens mündet. Direkt unterhalb der Luftaustrittsöffnung ist in dem Lufteintrittsstutzen ein Drehschieber gelagert, dessen Achse nahe einer Wand des Lufteintrittsstutzens liegt. Der Drehschieber ist sektorförmig ausgebildet und hat mehrere konzentrisch gekrümmte Luftleitelemente. Soll die Windschutzscheibe beschlagfrei bzw. eisfrei gemacht werden, ist der Drehschieber vollständig in den Lufteintrittsstutzen eingetaucht, wobei die durchgehenden Luftleitelemente die austretende Strömung stark drosseln. Dies hat zur Folge, dass beispielsweise im Winter zum Enteisen der Windschutzscheibe nicht die volle Wärmeleistung zur Verfügung steht, so dass das Enteisen ziemlich lange dauert und vor dem Abfahren viel Kraftstoff nutzlos verbraucht werden muss. Dieser Nachteil kann nur durch stärkere Gebläse kompensiert werden, was jedoch die Geräuschbelastung erhöht und bei der Anschaffung höhere Kosten verursacht.

Demgegenüber ist es Aufgabe der vorliegenden Erfindung, eine Belüftungsdüse zu schaffen, die auch bei einer relativ kleinen Gebläseleistung, wie sie bei Fahrerkabinen für Nutzfahrzeuge, Baumaschinen oder dgl. zur Verfügung steht, ein schnelles Enteisen, insbesondere der Windschutzscheibe, ermöglicht.

Zur Lösung dieser Aufgabe werden erfindungsgemäss die kennzeichnenden Merkmale von Anspruch 1 vorgeschlagen.

Hierdurch wird der Vorteil erreicht, dass die gesamte durch den Lufteintrittsstutzen in das Gehäuse eintretende Belüftungsleistung durch die Luftaustrittsöffnung abgegeben wird, wenn sich die Belüftungsdüse bzw. der Drehschieber in der Scheibenreinigungsstellung befinden. Andererseits besteht die Möglichkeit, den erwärmten oder gekühlten Frischund/oder Umluftstrom weitgehend verlustfrei auf den Fahrer zu lenken. Durch die Leitelemente des Drehschiebers werden nämlich Umlenk- und Verwirbelungsverluste innerhalb des Gehäuses auf ein vernachlässigbar geringes Minimum reduziert, so dass die Belüftungsdüse bereits mit einer geringen Luft- bzw. Kühl- oder Heizleistung eine voll befriedigende Belüftung des Fahrerplatzes gewährleistet. Der Drehschieber kann in verschiedenen Stellungen zur Raumbelüftung gebracht und in diesen gehalten werden, um auf diese Weise den Kopfbereich oder andere Bereiche des Fahrers eines Personenkraftwagens oder eines Nutzfahrzeugs bzw. einer Baumaschine stärker zu beaufschlagen.

Vorteilhafterweise ist die Luftaustrittsöffnung rechtwinklig ausgebildet. Sie kann jedoch auch im wesentlichen halbkreisförmig sein. Die Luftleitelemente sind dann entsprechend geformt und zur Achse gekrümmt. Eine derartige Belüftungsdüse oder auch eine mit quadratischem Querschnitt der Luftaustrittsöffnung lässt sich gut in Ecken von Fahrerkabinen anordnen.

Vorteilhafte Ausgestaltungen der Erfindung sind in den Unteransprüchen unter Schutz gestellt.

In der Zeichnung sind Ausführungsbeispiele der Erfindung wiedergegeben, die anhand der nachfolgenden Beschreibung näher erläutert werden. Es zeigt:

Fig. 1 die Belüftungsdüse in der Scheibenreinigungsstellung im Querschnitt,

Fig. 2 die Belüftungsdüse gemäss Fig. 1 in einer der Raumbelüftungsstellungen,

Fig. 3 eine Ansicht der Belüftungsdüse gemäss Pfeil III in Fig. 1 in doppelter Ausführung und

Fig. 4 ein weiteres Ausführungsbeispiel der Belüftungsdüse in der Sperrstellung.

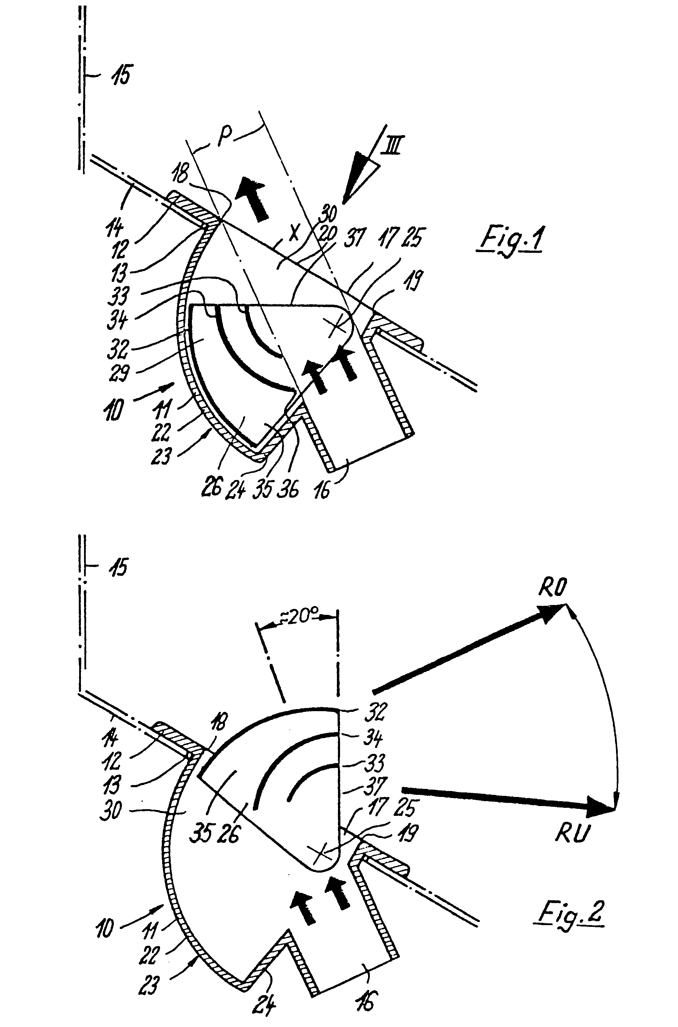

Eine allgemein mit 10 bezeichnete Belüftungsdüse hat ein Gehäuse 11 mit einem Anschlussflansch 12. Wie in Fig. 1, 2 und 4 angedeutet, dient der Anschlussflansch 12 zur Befestigung der Belüftungsdüse 10 in der Ausnehmung 13 einer Wandung 14, die einer Scheibe 15 benachbart ist. Die Scheibe 15 ist im allgemeinen eine Windschutzscheibe, kann jedoch auch eine Seitenscheibe sein, die eis- und beschlagfrei gehalten werden soll. Die Wandung 14 kann die Abdeckung des Armaturenbretts eines Personen- oder Lastkraftwagens sein.

Das Gehäuse 11 hat einen Lufteintrittsstutzen 16, der an eine nicht dargestellte Leitung bzw. direkt an ein Gerät zum Zuführen von erwärmter oder gekühlter Frisch- und/oder Umluft angeschlossen ist. Der Anschlussflansch 12 umschliesst eine Luftaustrittsöffnung 17, die zur der Achse des Lufteintrittsstutzens 16 unter einem stumpfen Winkel verläuft. Bei dem dargestellten Ausführungsbeispiel ist die Luftaustrittsöffnung 17 rechteckig und hat zwei lange Ränder 18 und 19 und zwei kurze Ränder 20 und 21. Der Abstand der langen Ränder 18 und 19 bestimmt die Breite des freien Querschnitts der Luftaustrittsöffnung 17. Diese Breite ist mindestens so gross gewählt wie die der Schnittebene X der Projektion P des Lufteintrittsstutzens 16 mit der Ebene der Luftaustrittsöffnung 17.

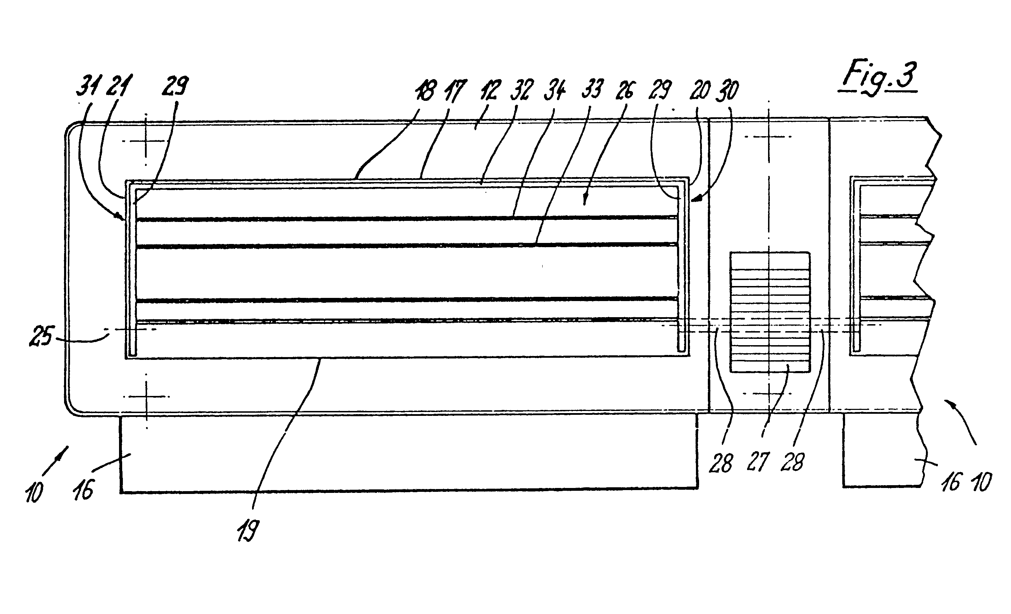

Der Rand 18 der Luftaustrittsöffnung 17 bildet die Erzeugende für den kreisbogenförmigen Mantel 22 einer Gehäuseerweiterung 23, die den stumpfen Winkel im wesentlichen abdeckt. Der Mantel 22 führt zu einer Wand 24, die im wesentlichen radial und parallel zu einer Achse 25 verläuft, die im Bereich des gegenüberliegenden Randes 19 der Luftaustrittsöffnung 17 in dem Gehäuse 11 angeordnet ist. Die Achse 25 verläuft im wesentlichen parallel zur Scheibe 15, und um die Achse 25 ist ein Drehschieber 26 schwenkbar gelagert. Zur Lagerung können Schwenkzapfen, Schwenkachsen, Nadellager oder dgl. an dem Drehschieber 26 oder in den Stirnwänden 30, 31 vorgesehen sein, die sich an die kürzeren Ränder 20 21 des Gehäuses 11 anschliessen. Bei dem in Fig. 3 dargestellten Ausführungsbeispiel ist eine Belüftungsdüse 10 mit einer weiteren koaxial angeordneten Belüftungsdüse 10 versehen, so dass sich eine doppelte Ausführung ergibt. Zwischen den beiden Belüftungsdüsen 10 bzw. zwischen den Luftaustrittsöffnungen 17 ist ein Betätigungselement 27 angeordnet, das auf einer Schwenkachse 28 sitzt, die mit der benachbarten, sektorförmigen Stirnwand 29 des Drehschiebers 26 fest verbunden ist.

Zwischen den freien Enden der sektorförmigen Stirnwände 29 des Drehschiebers 26 ist eine durchgehende Umfangswand 32 vorgesehen, die konzentrisch zu der Achse 25 des Drehschiebers 26 gekrümmt ist und einen Kreisbogen mit einem spitzen Scheitelwinkel abdeckt. Die Umfangswand 32 ist damit parallel zu dem Mantel 22 der Gehäuseerweiterung 23 verstellbar.

Zwischen der Achse 25 und der Umfangswand 32 weist der Drehschieber 26 mindestens ein gekrümmtes Leitelement 33 auf, das einen von der Achse 25 derart bemessenen Abstand hat, dass es bei in der Gehäuseerweiterung 23 geschwenktem Drehschieber 26 ausserhalb der Projektion P des Lufteintrittsstutzens 16 liegt.

Bei dem dargestellten Ausführungsbeispiel ist die Luftaustrittsöffnung 17 rechteckig, so dass der Mantel 22 der kreisbogenförmigen Gehäuseerweiterung 23 sowie die Umfangswand 32 und das Leitelement 33 des Drehschiebers 26 achsparallel gekrümmt sind.

Bei den dargestellten Ausführungsbeispielen hat ein der Umfangswand 32 benachbartes, weiteres Leitelement 34 im wesentlichen die gleiche Länge wie die Umfangswand 32, ist jedoch von dieser abweichend gekrümmt und bildet zusammen mit dieser einen sich düsenartig verjüngenden Kanal 35. Trotzdem liegt der Einlassrand 36 des Leitelements 34 in der Scheibenreinigungsstellung der Belüftungsdüse 10 bzw. des Drehschiebers 26 ausserhalb der Projektion P des Lufteintrittsstutzens, wozu auch das der Schwenkachse 25 benachbarte Leitelement 33 wesentlich kürzer ausgebildet ist als das Leitelement 34. Die störungsfreie Strömung in der Scheibenreinigungsstellung ist in Fig. 1 durch Pfeile verdeutlicht, wobei die im wesentlichen radial verlaufende Wand 24 der Gehäuseerweiterung 23 einen Anschlag für den Drehschieber 26 bildet.

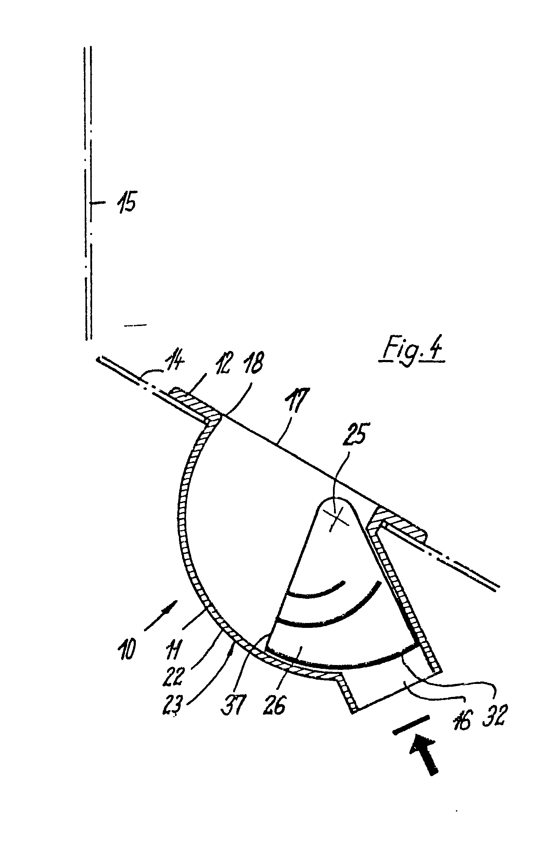

Bei dem in Fig. 4 dargestellten Ausführungsbeispiel ist die Erzeugende des Mantels 22 von dem Rand 18 bis an den Lufteintrittsstutzen 16 heran geführt, der den Mantel 22 der Gehäuseerweiterung 23 durchsetzt. Auf diese Weise sperrt die Umfangswand 32 des Drehschiebers 26 den Lufteintrittsstutzen 16 ab, so dass sich eine zugfreie Sperrstellung der Belüftungsdüse 10 ergibt. Bei diesem Ausführungsbeispiel kann für die Scheibenreinigungsstellung eine Arretierung für den Drehschieber 26 vorgesehen sein, wozu beispielsweise eine der Stirnwände 30, 31, des Gehäuses 11 und/oder die sektorförmigen Stirnwände 29 des Drehschiebers 26 miteinander in Eingriff bringbare Vorsprünge aufweisen können. Entsprechende Arretierungen bzw. ein Reibbelag können auch vorgesehen werden, um den Drehschieber 26 in verschiedenen Raumbelüftungsstellungen zwischen den Pfeilen RU und RO fixieren zu können. Der zwischen den Pfeilen RU und RO liegende Bereich entspricht einer Verstellung des Auslassrandes 37 des Drehschiebers 26 um etwa 20°, was in Fig. 2 angedeutet ist. Alle Arretierungen können auch dem Betätigungselement 27 zugeordnet sein.

Das Gehäuse 11 ist vorzugsweise aus Kunststoff gefertigt. Auch der Drehschieber 26 ist vorzugsweise als Kunststoffteil ausgebildet, wobei Schwenkzapfen einstückig an die sektorförmigen Stirnwände 29 angeformt sein können.

Der stumpfe Winkel zwischen der Ebene der Luftaustrittsöffnung 17 und der Achse des Lufteintrittsstutzens 16 beträgt vorzugsweise 140°. Der spitze Winkel des Drehschiebers 26 ist 50°.

## Patentansprüche

1. Belüftungsdüse für Scheiben (15), insbesondere Windschutzscheiben, und mindestens einen Bereich des Innenraums eines Personenkraftwagens, einer Fahrerkabine, eines Nutzfahrzeugs, einer Baumaschine oder dgl., mit einem einen Eintrittsstutzen (16) für ggf. erwärmte oder gekühlte Frisch- und/oder Umluft und eine Luftaustrittsöffnung (17) aufweisenden Gehäuse (11), mit einem Drehschieber (26), der um eine im wesentlichen parallel zur Scheibe verlaufenden Achse (25) schwenkbar gelagert und mit gekrümmten Luftleitelementen (32, 34, 33) versehen ist, wobei im Bereich eines Randes (19) der Luftaustrittsöffnung (17) die Achse (25) des Drehschiebers (26) angeordnet ist, dadurch gekennzeichnet, dass die Ebene der Luftaustrittsöffnung (17) zu der Achse des Lufteintrittsstutzens (16) unter einem stumpfen Winkel verläuft und die Breite des freien Querschnitts der Luftaustrittsöffnung (17) mindestens so gross ist wie die der Schnittebene (X) der Projektion (P) des Lufteintrittsstutzens (16) mit der Ebene der Luftaustrittsöffnung (17), dass im Bereich des gegenüberliegenden Randes (18) der Luftaustrittsöffnung (17) die Erzeugende für eine kreisbogenförmige Gehäuseerweiterung (23) vorgesehen ist, in welcher der Drehschieber (26) aufnehmbar ist.

2. Düse nach Anspruch 1, dadurch gekennzeichnet, dass zwischen den freien Enden von sektorförmigen Stirnwänden (29) des Drehschiebers (26) eine durchgehende Umfangswand (32) vorgesehen ist, die konzentrisch zu der Achse (25) des Drehschiebers (26) gekrümmt ist und einen Kreisbogen mit einem spitzen Scheitelwinkel abdeckt.

3. Düse nach Anspruch 1 oder 2, dadurch gekennzeichnet, dass der Drehschieber (26) zwischen der Achse (25) und der Umfangswand (32) mindestens ein gekrümmtes Leitelement (33) aufweist.

4. Düse nach mindestens einem der Ansprüche 1 bis 3, dadurch gekennzeichnet, dass das gekrümmte Leitelement (33) des Drehschiebers (26) von dessen Achse (25) einen derart bemessenen Abstand hat, dass es bei in die Gehäuseerweiterung (23) geschwenktem Drehschieber (26) ausserhalb der Projektion (P) des Lufteintrittsstutzens (16) liegt.

5. Düse nach mindestens einem der Ansprüche 1 bis 4, dadurch gekennzeichnet, dass die Luftaustrittsöffnung (17) rechtwinklig ausgebildet ist, der Mantel (22) der kreisbogenförmigen Gehäuseerweiterung (23) sowie die Umfangswand und das Leitelement (33) des Drehschiebers (26) achsparallel gekrümmt ist.

6. Düse nach mindestens einem der Ansprüche 1 bis 5, dadurch gekennzeichnet, dass ein der Umfangswand (32) benachbartes, weiteres Leitelement (34) im wesentlichen die gleiche Länge wie die Umfangswand (32) hat, jedoch von dieser abweichend gekrümmt ist und zusammen mit dieser einen sich düsenartig verjüngenden Kanal (35) bildet.

7. Düse nach mindestens einem der Ansprüche 1 bis 6, dadurch gekennzeichnet, dass das der Achse (25) benachbarte Leitelement (33) wesentlich kürzer ist als das der Umfangswand (32) benachbarte, weitere Leitelement (34).

8. Düse nach mindestens einem der Ansprüche 1 bis 7, dadurch gekennzeichnet, dass die Gehäuseerweiterung (23) eine parallel zur Achse (25) im wesentlichen radial verlaufende Wand (24) aufweist, die der Lufteintrittsstutzen (16) durchsetzt und die einen Anschlag für den Drehschieber (26) in dessen Scheibenreinigungsstellung bildet.

9. Düse nach mindestens einem der Ansprüche 1 bis 7, dadurch gekennzeichnet, dass die Erzeugende der Gehäuseerweiterung (23) bis an den Lufteintrittsstutzen (16) geführt ist, der deren Mantel (22) durchsetzt.

10. Düse nach mindestens einem der Ansprüche 1 bis 9, dadurch gekennzeichnet, dass das Gehäuse (11) aus Kunststoff gefertigt ist.

11. Düse nach mindestens einem der Ansprüche 1 bis 9, dadurch gekennzeichnet, dass der Drehschieber (26) als Kunststoffteil ausgebildet ist.

12. Düse nach mindestens einem der Ansprüche 1 bis 11, dadurch gekennzeichnet, dass der Drehschieber (26) in der Achse (25) mindestens einen Schwenkzapfen bzw. eine Schwenkachse (28) aufweist, auf dem bzw. der ausserhalb der Gehäuseerweiterung (23) ein Betätigungselement (27) sitzt.

13. Düse nach mindestens einem der Ansprüche 1 bis 12, dadurch gekennzeichnet, dass der Drehschieber (26) in verschiedenen Raumbelüftungsstellungen (RU bis RO) fixierbar ist.

14. Düse nach mindestens einem der Ansprüche 1 bis 13, dadurch gekennzeichnet, dass mindestens zwei Düsen (10) koaxial nebeneinander angeordnet sind und die Schwenkzapfen bzw. Schwenkachse (28) für beide Düsen ein gemeinsames Betätigungselement (27) aufweisen.

## Claims

1. A ventilation nozzle for windows (15), in particular windscreens, and at least one zone of the interior of a motorcar, driver's cab, utility or commercial vehicle, building machine or the like, with a housing (11) having an inlet connector (16) for optionally heated or cooled fresh and/or recirculated air and an air-outlet opening (17), with a rotary slide member (26) which is mounted to pivot about an axis (25) extending substantially parallel to the window and is provided with curved air-directing elements (32, 34, 33), the axis (25) of the rotary slide member (26) being disposed in the vicinity of an edge (19) of the air-outlet opening (17), characterised in that the plane of the air-outlet opening (17) extends at an obtuse angle to the axis of the air-inlet connector (16) and the width of the free cross-section of the air-outlet opening (17) is at least as great as that of the sectional plane (X) of the projection (P) of the air-inlet connector (16) on to the plane of the air-outlet opening (17), in that the generating line of an arcuate widened portion (23) of the housing, which can accommodate the rotary slide member (26), is provided in the vicinity of the opposite edge (18) of the air-outlet opening (17).

2. A nozzle according to Claim 1, characterised in that a continuous peripheral wall (32) is provided between the free ends of the sector-like end walls (29) of the rotary slide member (26), is curved concentrically with the axis (25) of the rotary slide member (26) and forms an arc having an acute apex angle.

3. A nozzle according to Claim 1 or 2, characterised in that between the axis (25) and the peripheral wall (32) the rotary slide member (26) has at least one curved directing element (33).

4. A nozzle according to at least one of Claims 1 to 3, characterised in that the curved directing element (33) of the rotary slide member (26) is at such a distance from its axis (25) that it lies outside the projection (P) of the air-inlet connector (16), when the rotary slide member (26) is pivoted into the widened housing portion (23).

5. A nozzle according to at least one of Claims 1 to 4, characterised in that the air-outlet opening (17) is of rectangular shape, while the outer surface (22) of the arcuate widened housing portion (23) and the circumferential wall (32) and the directing element (33) of the rotary slide member (26) are curved axially parallel to one another.

6. A nozzle according to at least one of Claims 1 to 5, characterised in that another directing element (34) adjacent the circumferential wall (32) has substantially the same length as the circumferential wall (32) but is of different curvature thereto and forms together therewith a duct (35) tapering in the manner of a nozzle.

7. A nozzle according to at least one of Claims 1 to 6, characterised in that the directing element (33) adjacent the axis (25) is substantially shorter than the other directing element (34) adjacent the circumferential wall (32).

8. A nozzle according to at least one of Claims 1 to 7, characterised in that the widened housing portion (23) has a substantially radially extending wall (24) which is parallel to the axis (25) and which intersects the air-inlet connector (16) and forms an abutment for the rotary slide member (26) in its window cleaning position.

9. A nozzle according to at least one of Claims 1 to 7, characterised in that the generating line of the widened housing portion (23) leads up to the air-inlet connector (16) which intersects the outer surface (22) thereof.

10. A nozzle according to at least one of Claims 1 to 9, characterised in that the housing (11) is made of plastics material.

11. A nozzle according to at least one of Claims 1 to 9, characterised in that the rotary slide member (26) is formed as a plastics part.

12. A nozzle according to at least one of Claims 1 to 11, characterised in that on the axis (25) the rotary slide member (26) has at least one swivel journal or swivel spindle (28), on which an actuating member (27) is mounted outside the widened housing portion (23).

13. A nozzle according to at least one of Claims 1 to 12, characterised in that the rotary slide member (26) can be fixed in different interior ventilating settings (RU to RO).

14. A nozzle according to at least one of Claims 1 to 13, characterised in that at least two nozzles (10) are disposed coaxially side by side and the swivel journals or swivel spindle (28) for both nozzles have a common actuating member (27).

## Revendications

1. Aérateur pour vitres (15), notamment pour pare-brise, et pour au moins une région du volume intérieur d'un véhicule automobile privé, d'une cabine de conducteur, d'un véhicule utilitaire, d'un engin de chantier ou équivalent, comprenant un boîtier (11) présentant une tubulure d'entrée (16) destinée à l'entrée d'air neuf et/ou recyclé, éventuellement réchauffé ou refroidi, et un orifice de sortie d'air (17), un volet tournant (26) qui est monté pour tourner autour d'un axe (25) s'étendant sensiblement parallèlement à la vitre, et des déflecteurs d'air incurvés (32, 34, 33), l'axe (25) du volet tournant (26) étant agencé dans la région d'un bord (19) de l'orifice de sortie d'air (17), caractérisé en ce que le plan de l'orifice de sortie d'air (17) forme un angle obtus avec l'axe de la tubulure d'entrée d'air (16), et la largeur de la section libre de l'orifice de sortie d'air (17) est au moins aussi grande que celle du plan d'intersection (X) de la projection (P) de la tubulure d'entrée d'air (16) avec le plan de l'orifice de sortie d'air (17), et en ce que, dans la région du bord opposé (18) de l'orifice de sortie d'air (17) se trouve la génératrice d'un élargissement de boîtier en forme d'arc de cercle (23) dans lequel le volet tournant (26) peut se loger.

2. Aérateur selon la revendication 1, caractérisé en ce que, entre les extrémités libres des parois frontales (29) en forme de secteur de cercle du volet tournant (26), est prévue une paroi périphérique continue (32) qui est incurvée en un arc centré sur l'axe (25) du volet tournant (26) et qui couvre un arc de cercle dont l'angle au centre est un angle aigu.

3. Aérateur selon la revendication 1 ou 2, caractérisé en ce que le volet tournant (26) présente au moins un déflecteur incurvé (33) situé entre l'axe (25) et la paroi périphérique (32).

4. Aérateur selon au moins une des revendications 1 à 3, caractérisé en ce que le déflecteur incurvé (33) du volet tournant (26) se trouve à une distance de son axe (25) qui est calculée de manière que le déflecteur se trouve en dehors des limites de la projection (P) de la tubulure d'entrée d'air (16) lorsque le volet tournant (26) est enfoncé dans l'élargissement (23) du boîtier.

5. Aérateur selon au moins une des revendications 1 à 4, caractérisé en ce que l'orifice de sortie d'air (17) est de forme rectangulaire, tandis que la paroi latérale (22) de l'élagissement (23) en arc de cercle du boîtier, ainsi que la paroi périphérique (32) et le déflecteur (33) du volet tournant (26) sont incurvés selon des surfaces parallèles à l'axe.

6. Aérateur selon au moins une des revendications 1 à 5, caractérisé en ce qu'un autre déflecteur (34) voisin de la paroi périphérique (32), possède sensiblement la même longueur que la paroi périphérique (32) mais est incurvé avec une forme différente de celle de cette paroi et forme, en combinaison avec cette paroi, un canal (35) qui se rétrécit avec une forme de tuyère.

7. Aérateur selon au moins une des revendications 1 à 6, caractérisé en ce que le déflecteur (33) voisin de l'axe (25) est beaucoup plus court que l'autre déflecteur (34), qui est proche de la paroi périphérique (32).

8. Aérateur selon au moins une des revendications 1 à 7, caractérisé en ce que l'élagissement (23) du boîtier présente une paroi (24) qui s'étend parallèlement à l'axe (25) et sensiblement radialement, et qui est traversée par la tubulure d'entrée d'air (16) et forme une butée pour le volet tournant (26) dans sa position de balayage de la vitre.

9. Aérateur selon au moins une des revendications 1 à 7, caractérisé en ce que la génératrice de l'élargissement (23) du boîtier se prolonge jusqu'à la tubulure d'entrée (16) laquelle traverse la paroi latérale (22) de cet élargissement.

10. Aérateur selon au moins une des revendications 1 à 9, caractérisé en ce que le boîtier (11) est fabriqué en matière platique.

11. Aérateur selon au moins une des revendications 1 à 9, caractérisé en ce que le volet tournant (26) est constitué par une pièce de matière plastique.

12. Aérateur selon au moins une des revendications 1 à 11, caractérisé en ce que le volet tournant (26) présente sur l'axe (25) au moins un tourillon ou un axe d'articulation (28) sur lequel est monté un élément d'actionnement (27), situé à l'extérieur de l'élargissement (23) du boîtier.

13. Aérateur selon au moins une des revendications 1 à 12, caractérisé en ce que le volet tournant (26) peut être verrouillé dans différentes positions d'aération de l'espace (RU à RO).

14. Aérateur selon au moins une des revendications 1 à 13, caractérisé en ce qu'au moins deux aérateurs (10) sont disposés coaxialement l'un à côté de l'autre, et que les tourillons ou l'axe d'articulation (28) prévus pour les deux aérateurs présentent un élément d'actionnement commun (27).

Fig.1

Fig.2

*Fig.3*

EP 0 151 756 B1

Fig.4